# EUROPEAN PATENT SPECIFICATION

(11) **EP 3 089 523 B1**
(45) Date of publication and mention of the grant of the patent: **21.03.2018**
(21) Application number: 14889888.5
(22) Date of filing: 23.04.2014
(51) Int. Cl.: H04W 52/02, H04W 52/36, H04L 1/00

(54) **METHOD AND DEVICE FOR CONTROLLING TRANSMISSION POWER**
VERFAHREN UND VORRICHTUNG ZUR STEUERUNG DER SENDELEISTUNG
PROCÉDÉ ET DISPOSITIF DE RÉGULATION DE PUISSANCE DE TRANSMISSION

(43) Date of publication of application: 02.11.2016
(73) Proprietor: Huawei Device Co., Ltd., Shenzhen, Guangdong 518129 (CN)
(72) Inventor: LI, Min, Shenzhen Guangdong 518129 (CN)
(74) Representative: Pfenning, Meinig & Partner mbB
(86) International application number: PCT/CN2014/076053
(87) International publication number: WO 2015/161471

(56) References cited:
- EP-A1- 1 873 913
- WO-A1-2010/048471
- CN-A- 1 296 670
- CN-A- 1 411 638
- CN-A- 101 098 174
- CN-A- 103 119 850
- "3rd Generation Partnership Project; Technical Specification Group GSM/EDGE Radio Access Network; Physical layer on the radio path; General description (Release 12)", 3GPP STANDARD; 3GPP TS 45.001, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. GERAN WG1, no. V12.0.0, 19 September 2013 (2013-09-19), pages 1-44, XP050712366, [retrieved on 2013-09-19]

## Description

### TECHNICAL FIELD

The present invention relates to the communications field, and in particular, to a method for controlling transmit power and an apparatus.

### BACKGROUND

A wireless home gateway is used to provide a service for a user terminal that is to access a wireless network. When a signal of a wireless network is poor, and the wireless home gateway transmits a large amount of data, a power loss of the wireless home gateway is large, and therefore a temperature of the wireless home gateway rapidly increases. To meet a requirement of product miniaturization, heat dissipation of the wireless home gateway becomes a relatively tough problem.

In the prior art, when a wireless home gateway detects that a temperature of the wireless home gateway itself is greater than a preset temperature value, the wireless home gateway first reduces a transmission rate of an LTE (Long Term Evolution, Long Term Evolution) module, of the wireless home gateway itself, for performing data transmission with a base station, and then reduces transmit power of an AP (Access Point, access point) module, of the wireless home gateway itself, for performing data transmission with user equipment, so as to reduce a power loss of the wireless home gateway, thereby lowering the temperature of the wireless home gateway.

In the foregoing method for lowering the temperature of the wireless home gateway, the transmit power of the AP module is reduced by using transmit power whose value is a specific empirical value. In this way, directly reducing the transmit power of the AP module results in reduced EVM (Error Vector Magnitude, error vector magnitude) and reduced sensitivity that are of the wireless home gateway. WO2010048471A1 provides a method and an apparatus for controlling component temperature in a wireless transmit receive unit (WTRU) and thereby preventing the component from reaching an undesirable temperature. A method and an apparatus are provided for reducing a value of a maximum allowed transmit power to adjust a data rate. The WTRU adjusts the value of the maximum allowed transmit power resulting in an adjustment to the temperature of the component.

EP1873913A1 discloses a device comprising a transmitter, at least one temperature sensor; and a controller. The controller is responsive to the at least one temperature sensor indicating that a temperature has risen above a first threshold to control the transmitter to reduce transmit power from a first power level to a second power level, wherein the second power level is a non-zero power level.

### SUMMARY

Embodiments of the present invention provide a method for controlling transmit power and an apparatus according to the independent claims, which are used to ensure EVM and sensitivity that are of a gateway device while lowering a temperature of the gateway device.

To achieve the foregoing objective, the following technical solutions are provided in the embodiments of the present invention:

According to a first aspect, an embodiment of the present invention provides a method for controlling transmit power, including: acquiring, by a gateway device, a temperature value of an electronic component; acquiring, by the gateway device, a current transmission mode when the gateway device determines that the temperature value is greater than or equal to a preset temperature value, where the transmission mode is a mode used by the gateway device to send a signal; and adjusting, by the gateway device, transmit power according to the transmission mode, where adjusted transmit power is less than the transmit power before adjustment.

In a first possible implementation manner of the first aspect, the adjusting transmit power according to the transmission mode includes: when the gateway device determines that the transmission mode is a first mode, switching, by the gateway device, the first mode to a second mode, and adjusting the transmit power, where a maximum transmit rate of the gateway device in the first mode is greater than a maximum transmit rate of the gateway device in the second mode.

With reference to the first aspect, in a second possible implementation manner of the first aspect, the adjusting, by the gateway device, transmit power according to the transmission mode includes: when the gateway device determines that the transmission mode is a second mode, switching, by the gateway device, the second mode to a third mode, and adjusting the transmit power, where a maximum transmit rate of the gateway device in the third mode is less than a maximum transmit rate of the gateway device in the second mode.

With reference to the second possible implementation manner of the first aspect, in a third possible implementation manner of the first aspect, before the switching, by the gateway device, the second mode to a third mode, the method further includes: acquiring, by the gateway device, a current transmit rate; where the switching, by the gateway device, the second mode to a third mode includes: switching, by the gateway device, the second mode to the third mode when the gateway device determines that the current transmit rate is less than a first preset value.

With reference to the third possible implementation manner of the first aspect, in a fourth possible implementation manner of the first aspect, when the gateway device determines that the current transmit rate is greater than or equal to the first preset value, the gateway device limits the current transmit rate to a first preset rate, and adjusts the transmit power, where the first preset rate is a minimum transmit rate that is in at least one transmit rate of the gateway device in the second mode and is greater than the maximum transmit rate of the gateway device in the third mode.

With reference to the first aspect, in a fifth possible implementation manner of the first aspect, the adjusting, by the gateway device, transmit power according to the transmission mode includes: when the gateway device determines that the transmission mode is the third mode, limiting, by the gateway device, the transmit rate to a second preset rate, and adjusting the transmit power, where the second preset rate is a minimum transmit rate used to send a signal.

With reference to the first aspect or any one of the first to the fifth possible implementation manners of the first aspect, in a sixth possible implementation manner of the first aspect, the electronic component includes a memory chip or a crystal oscillator.

With reference to the first aspect or any one of the first to the sixth possible implementation manners of the first aspect, in a seventh possible implementation manner of the first aspect, after the adjusting, by the gateway device, transmit power according to the transmission mode, the method further includes: sending, by the gateway device, a signal according to the adjusted transmit power.

According to a second aspect, an embodiment of the present invention provides a gateway device, including: an acquiring unit, configured to acquire a temperature value of an electronic component, where the acquiring unit is further configured to acquire a current transmission mode when it is determined that the temperature value is greater than or equal to a preset temperature value, where the transmission mode is a mode used by the gateway device to send a signal; and a processing unit, configured to adjust transmit power according to the transmission mode acquired by the acquiring unit, where adjusted transmit power is less than the transmit power before the adjustment.

In a first possible implementation manner of the second aspect, the processing unit is specifically configured to, when the acquiring unit determines that the transmission mode is a first mode, switch the first mode to a second mode, and adjust the transmit power, where a maximum transmit rate of the gateway device in the first mode is greater than a maximum transmit rate of the gateway device in the second mode.

With reference to the second aspect, in a second possible implementation manner of the second aspect, the processing unit is specifically configured to, when the acquiring unit determines that the transmission mode is a second mode, switch the second mode to a third mode, and adjust the transmit power, where a maximum transmit rate of the gateway device in the third mode is less than a maximum transmit rate of the gateway device in the second mode.

With reference to the second possible implementation manner of the second aspect, in a third possible implementation manner of the second aspect, the acquiring unit is further configured to acquire a current transmit rate; and the processing unit is specifically configured to, when the acquiring unit determines that the current transmit rate is less than a first preset value, switch the second mode to the third mode.

With reference to the third possible implementation manner of the second aspect, in a fourth possible implementation manner of the second aspect, the processing unit is specifically configured to, when the acquiring unit determines that the current transmit rate is greater than or equal to the first preset value, limit the current transmit rate to a first preset rate, and adjust the transmit power, where the first preset rate is a minimum transmit rate that is in at least one transmit rate of the gateway device in the second mode and is greater than the maximum transmit rate of the gateway device in the third mode.

With reference to the second aspect, in a fifth possible implementation manner of the second aspect, the processing unit is specifically configured to, when the acquiring unit determines that the transmission mode is the third mode, limit the transmit rate to a second preset rate, and adjust the transmit power, where the second preset rate is a minimum transmit rate used to send a signal.

With reference to the second aspect or any one of the first to the fifth possible implementation manners of the second aspect, in a sixth possible implementation manner of the second aspect, the electronic component includes a memory chip or a crystal oscillator.

With reference to the second aspect or any one of the first to the sixth possible implementation manners of the second aspect, in a seventh possible implementation manner of the second aspect, the gateway device further includes: a sending unit, configured to send a signal according to the adjusted transmit power.

According to a third aspect, an embodiment of the present invention provides a gateway device, including: a communications interface, configured to acquire a temperature value of an electronic component, where the communications interface is further configured to acquire a current transmission mode when it is determined that the temperature value is greater than or equal to a preset temperature value, where the transmission mode is a mode used by the gateway device to send a signal; and a processor, configured to adjust transmit power according to the transmission mode acquired by the communications interface, where adjusted transmit power is less than the transmit power before the adjustment.

In a first possible implementation manner of the third aspect, the processor is specifically configured to, when the communications interface determines that the transmission mode is a first mode, switch the first mode to a second mode, and adjust the transmit power, where a maximum transmit rate of the gateway device in the first mode is greater than a maximum transmit rate of the gateway device in the second mode.

With reference to the third aspect, in a second possible implementation manner of the third aspect, the processor is specifically configured to, when the communications interface determines that the transmission mode is a second mode, switch the second mode to a third mode, and adjust the transmit power, where a maximum transmit rate of the gateway device in the third mode is less than a maximum transmit rate of the gateway device in the second mode.

With reference to the second possible implementation manner of the third aspect, in a third possible implementation manner of the third aspect, the communications interface is further configured to acquire a current transmit rate; and the processor is specifically configured to, when the communications interface determines that the current transmit rate is less than the first preset value, switch the second mode to the third mode.

With reference to the third possible implementation manner of the third aspect, in a fourth possible implementation manner of the third aspect, the processor is specifically configured to, when the communications interface determines that the current transmit rate is greater than or equal to the first preset value, limit the current transmit rate to a first preset rate, and adjust the transmit power, where the first preset rate is a minimum transmit rate that is in at least one transmit rate of the gateway device in the second mode and is greater than the maximum transmit rate of the gateway device in the third mode.

With reference to the third aspect, in a fifth possible implementation manner of the third aspect, the processor is specifically configured to, when the communications interface determines that the transmission mode is the third mode, limit the transmit rate to a second preset rate, and adjust the transmit power, where the second preset rate is a minimum transmit rate used to send a signal.

With reference to the third aspect or any one of the first to the fifth possible implementation manners of the third aspect, in a sixth possible implementation manner of the third aspect, the electronic component includes a memory chip or a crystal oscillator.

With reference to the third aspect or any one of the first to the sixth possible implementation manners of the third aspect, in a seventh possible implementation manner of the third aspect, the gateway device further includes: a transmitter, configured to send a signal according to the adjusted transmit power.

The embodiments of the present invention provide a method for controlling transmit power and an apparatus. After acquiring a temperature value of an electronic component, a gateway device compares the acquired temperature value of the electronic component with a preset temperature value; and when it is determined that the acquired temperature value of the electronic component is greater than or equal to the preset temperature value, acquires a current transmission mode, where the current transmission mode is used by the gateway device to send a signal, and adjusts transmit power of the gateway device according to the current transmission mode used to send a signal. Therefore, the gateway device may reduce a transmit rate of the gateway device by switching the transmission mode, or may reduce the transmit rate of the gateway device by directly limiting a current transmit rate used to send a signal, which further reduces the transmit power of the gateway device, thereby ensuring EVM and sensitivity that are of the gateway device and ensuring data transmission reliability of the gateway device while lowering a temperature of the gateway device.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for controlling transmit power according to an embodiment of the present invention;
FIG. 2 is schematic flowchart of another method for controlling transmit power according to an embodiment of the present invention;
FIG. 3 is a schematic functional diagram of a gateway device according to an embodiment of the present invention;
FIG. 4 is schematic functional diagram of another gateway device according to an embodiment of the present invention; and
FIG. 5 is a schematic structural diagram of a gateway device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

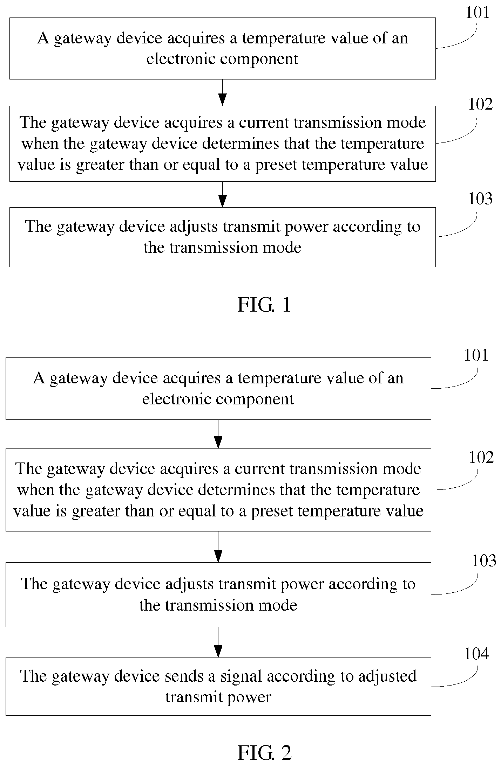

An embodiment of the present invention provides a method for controlling transmit power, and as shown in FIG. 1, the method includes:
101. A gateway device acquires a temperature value of an electronic component.

The electronic component includes a memory chip or a crystal oscillator.

Specifically, the gateway device acquires a temperature of the memory chip or the crystal oscillator by using a detection module that detects the temperature of the memory chip or the crystal oscillator, and compares the acquired temperature value of the memory chip or the crystal oscillator with a preset temperature value, so as to determine whether the acquired temperature value of the memory chip or the crystal oscillator is greater than or equal to the preset temperature value.

102. The gateway device acquires a current transmission mode when the gateway device determines that the temperature value is greater than or equal to a preset temperature value.

The transmission mode is a mode used by the gateway device to send a signal.

Specifically, when the gateway device determines that the acquired temperature value of the memory chip or the crystal oscillator is greater than or equal to the preset temperature value, the gateway device reads the stored current transmission mode used to send a signal.

103. The gateway device adjusts the transmit power according to the transmission mode.

Adjusted transmit power is less than the transmit power before the adjustment.

Specifically, methods for adjusting, by the gateway device, the transmit power of the gateway device vary with different acquired current transmission modes used to send a signal, which are specifically as follows:
First method: When the gateway device determines that the transmission mode is a first mode, the gateway device switches the first mode to a second mode, and adjusts the transmit power, where
   a maximum transmit rate of the gateway device in the first mode is greater than a maximum transmit rate of the gateway device in the second mode.

Specifically, when the gateway device determines that the current transmission mode used to send a signal is the first mode, the gateway device switches the first mode to the second mode, so that when sending a signal, the gateway device uses a transmit rate, of the gateway device, defined in the second mode to send a signal. Compared with using a transmit rate, of the gateway device, defined in the first mode to send a signal, in the second mode, the transmit rate is reduced, and the corresponding adjustment uses transmit power corresponding to the transmit rate, of the gateway device, defined in the second mode, that is, current transmit power is reduced to the transmit power corresponding to the transmit rate, of the gateway device, defined in the second mode, thereby lowering a temperature of the gateway device.

It should be noted that, at least one transmit rate, of the gateway device, for sending a signal is defined in the first mode, and the at least one transmit rate defined in the first mode includes all transmit rates of the gateway device, for sending a signal, and defined in the second mode, that is, when the gateway device uses the first mode to send a signal, a transmit rate used in the second mode to send a signal may be compatibly used.

It should be noted that, after the gateway device switches the first mode to the second mode, the transmit rate defined in the second mode and used by the gateway device to send a signal differs from the transmit rate defined in the first mode and used to send a signal.

It should be noted that, when the current transmission mode acquired by the gateway device and used to send a signal is the first mode, the gateway device may further control the transmit power of the gateway device according to an acquired current transmit rate used to send a signal, which is not limited in the present invention.

Second method: When the gateway device determines that the transmission mode is a second mode, the gateway device switches the second mode to a third mode, and adjusts the transmit power, where
a maximum transmit rate of the gateway device in the third mode is less than a maximum transmit rate of the gateway device in the second mode.

Specifically, when the gateway device determines that the current transmission mode used to send a signal is the second mode, the gateway device switches the second mode to the third mode, so that when sending a signal, the gateway device uses a transmit rate, of the gateway device, defined in the third mode to send a signal. Compared with using a transmit rate, of the gateway device, defined in the second mode to send a signal, in the third mode, the transmit rate is reduced; and the corresponding adjustment uses transmit power corresponding to the transmit rate, of the gateway device, defined in the third mode, that is, current transmit power is reduced to the transmit power corresponding to the transmit rate, of the gateway device, defined in the third mode, thereby lowering a temperature of the gateway device.

It should be noted that, before the gateway device switches the second mode to the third mode, the method further includes: acquiring, by the gateway device, a current transmit rate.

That is, when the gateway device determines that the current transmission mode used to send a signal is the second mode, the gateway device may further acquire the current transmit rate used to send a signal, and compare the acquired current transmit rate used to send a signal with a first preset value, so as to determine whether the acquired current transmit rate used to send a signal is less than the first preset value.

The gateway device switches the second mode to the third mode when the gateway device determines that the current transmit rate is less than the first preset value.

That is, when determining that the current transmit rate is less than the first preset value, the gateway device switches the second mode to the third mode, so that when sending a signal, the gateway device uses a transmit rate, of the gateway device, defined in the third mode to send a signal. Compared with using a transmit rate, of the gateway device, defined in the second mode to send a signal, in the third mode, the transmit rate is reduced; and the corresponding adjustment uses transmit power corresponding to the transmit rate, of the gateway device, defined in the third mode, that is, current transmit power is reduced to the transmit power corresponding to the transmit rate, of the gateway device, defined in the third mode, thereby lowering a temperature of the gateway device.

When the gateway device determines that the current transmit rate is greater than or equal to the first preset value, the gateway device limits the current transmit rate to a first preset rate, and adjusts the transmit power, where
the first preset rate is a minimum transmit rate that is in at least one transmit rate of the gateway device in the second mode and is greater than the maximum transmit rate of the gateway device in the third mode.

Specifically, when the gateway device determines that the current transmit rate used to send a signal is greater than or equal to the first preset value, the gateway device determines that the current transmit rate used to send a signal is too large and transmit power corresponding to the transmit rate is too high, which causes an increase of the temperature of the gateway device. In this case, to avoid an increase of the temperature of the gateway device, the current transmit rate used to send a signal needs to be reduced, that is, the current transmit rate used to send a signal is limited to the minimum transmit rate that is in the at least one transmit rate of the gateway device in the second mode and is greater than the maximum transmit rate of the gateway device in the third mode, that is, the current transmit rate used to send a signal is limited to the first preset rate. In this way, the first preset rate is used to send a signal, and transmit power corresponding to the first preset rate is correspondingly adjusted, that is, the current transmit power is reduced to the transmit power corresponding to the first preset rate, and then the transmit power corresponding to the first preset rate is used to send a signal, which avoids an increase of the temperature of the gateway device.

It should be noted that, at least one transmit rate, of the gateway device, for sending a signal is defined in the second mode, and the at least one transmit rate defined in the second mode includes all transmit rates of the gateway device, for sending a signal, and defined in the third mode, that is, when the gateway device uses the second mode to send a signal, a transmit rate used in the third mode to send a signal may be compatibly used.

It should be noted that, after the gateway device switches the second mode to the third mode, the transmit rate defined in the second mode and used by the gateway device to send a signal differs from the transmit rate defined in the second mode and used to send a signal.

Third method: When the gateway device determines that the transmission mode is the third mode, the gateway device limits the transmit rate to a second preset rate, and adjusts the transmit power, where
the second preset rate is a minimum transmit rate used to send a signal.

Specifically, when the gateway device determines that the current transmission mode used to send a signal is the third mode, and when sending a signal, the gateway device limits the transmit rate to the minimum transmit rate used to send a signal, that is, limits the transmit rate to the second preset rate, where the second preset rate can ensure normal sending of a signal, and transmit power corresponding to the second preset rate is correspondingly adjusted, that is, current transmit power is reduced to the transmit power corresponding to the second preset rate, and then the transmit power corresponding to the second preset rate is used to send a signal, thereby lowering a temperature of the gateway device.

It should be noted that, the first mode may be an n mode, and may also be a mode defined by a user according to a specific rule, and a maximum transmit rate in this mode is greater than a maximum transmit rate in the n mode; the second mode may be a g mode, and may also be another mode defined by a user according to a specific rule; the third mode may be a b mode, and may also be another mode defined by a user according to a specific rule; the present invention does not constitute a limitation thereto. n, g, and b respectively represent different wireless protocols, for example, n represents 802.11n, g represents 802.11g, and b represents 802.11b.

Preferably, the first mode is the n mode, the second mode is the g mode, the third mode is the b mode, the first preset value is 20Mbps (Million bits per second, megabit per second), the first preset rate is 12Mbps, and the second preset rate is 2Mbps.

Exemplarily, when the gateway device determines that the transmission mode is the n mode, the gateway device switches the n mode to the g mode, sends a signal according to a transmit rate defined in the g mode, and correspondingly adjusts transmit power corresponding to the transmit rate in the g mode, thereby reducing the transmit power, and further lowering the temperature of the gateway device.

When the gateway device determines that the transmission mode is the g mode, the gateway device acquires the current transmit rate; and when the gateway device determines that the current transmit rate is less than 20Mbps, switches the g mode to the b mode, sends a signal according to a transmit rate defined in the b mode, and correspondingly adjusts transmit power corresponding to the transmit rate in the B mode, thereby reducing the transmit power, and further lowering the temperature of the gateway device; or when the gateway device determines that the current transmit rate is greater than or equal to 20Mbps, limits the current transmit rate to 12Mbps, and correspondingly adjusts transmit power corresponding to the transmit rate, thereby reducing the transmit power, and further lowering the temperature of the gateway device.

When the gateway device determines that the transmission mode is the b mode, the gateway device limits the current transmit rate to 2Mbps, and correspondingly adjusts transmit power corresponding to the transmit rate, thereby reducing the transmit power, and further lowering the temperature of the gateway device.

According to the method for controlling transmit power provided in this embodiment of the present invention, after acquiring a temperature value of an electronic component, a gateway device compares the acquired temperature value of the electronic component with a preset temperature value; when the gateway device determines that the acquired temperature value of the electronic component is greater than or equal to the preset temperature value, acquires a current transmission mode, where the current transmission mode is used by the gateway device to send a signal; and adjusts transmit power of the gateway device according to the current transmission mode used to send a signal. Therefore, the gateway device may reduce a transmit rate of the gateway device by switching the transmission mode, or may reduce the transmit rate of the gateway device by directly limiting a current transmit rate used to send a signal, which further reduces the transmit power of the gateway device, thereby ensuring EVM and sensitivity that are of the gateway device and ensuring data transmission reliability of the gateway device while lowering a temperature of the gateway device.

Further, after step 103 is performed, as shown in FIG. 2, the method further includes:
104. The gateway device sends a signal according to the adjusted transmit power.

Specifically, after the gateway device adjusts the transmit power of the gateway device according to the current transmission mode used to send a signal, when sending a signal, the gateway device uses the adjusted transmit power to send a signal, which effectively lowers the temperature of the gateway device.

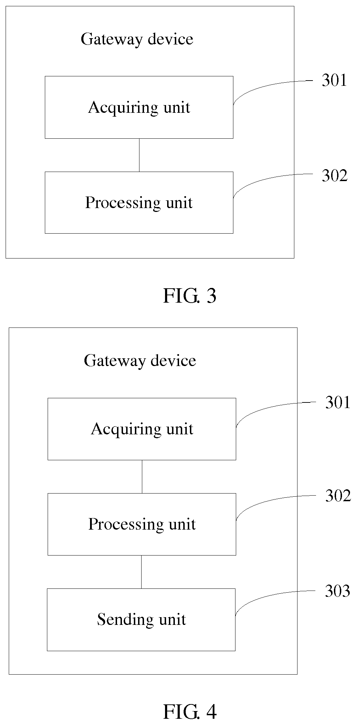

An embodiment of the present invention provides a gateway device, which as shown in FIG. 3, includes: an acquiring unit 301 and a processing unit 302.

The acquiring unit 301 is configured to acquire a temperature value of an electronic component.

The electronic component includes a memory chip or a crystal oscillator.

Specifically, the acquiring unit 301 acquires a temperature of the memory chip or the crystal oscillator by using a detection module that detects the temperature of the memory chip or the crystal oscillator, and compares the acquired temperature value of the memory chip or the crystal oscillator with a preset temperature value, so as to determine whether the acquired temperature value of the memory chip or the crystal oscillator is greater than or equal to the preset temperature value.

The acquiring unit 301 is further configured to acquire a current transmission mode when it is determined that the temperature value is greater than or equal to a preset temperature value.

The transmission mode is a mode used by the gateway device to send a signal.

Specifically, when it is determined that the acquired temperature value of the memory chip or the crystal oscillator is greater than or equal to the preset temperature value, the acquiring unit 301 reads the stored current transmission mode used to send a signal.

The processing unit 302 is configured to adjust transmit power according to the transmission mode acquired by the acquiring unit 301.

Adjusted transmit power is less than the transmit power before the adjustment.

Specifically, methods for adjusting, by the processing unit 302, the transmit power of the gateway device vary with different current transmission modes acquired by the acquiring unit 301 and used to send a signal, which are specifically as follows:

First method: The processing unit 302 is specifically configured to, when the acquiring unit 301 determines that the transmission mode is a first mode, switch the first mode to a second mode, and adjust the transmit power, where
a maximum transmit rate of the gateway device in the first mode is greater than a maximum transmit rate of the gateway device in the second mode.

Specifically, when the acquiring unit 301 determines that the current transmission mode used to send a signal is the first mode, the processing unit 302 switches the first mode to the second mode, so that when sending a signal, the gateway device uses a transmit rate, of the gateway device, defined in the second mode to send a signal. Compared with using a transmit rate, of the gateway device, defined in the first mode to send a signal, in the second mode, the transmit rate is reduced, and the corresponding adjustment uses transmit power corresponding to the transmit rate, of the gateway device, defined in the second mode, that is, current transmit power is reduced to the transmit power corresponding to the transmit rate, of the gateway device, defined in the second mode, thereby lowering a temperature of the gateway device.

It should be noted that, at least one transmit rate, of the gateway device, for sending a signal is defined in the first mode, and the at least one transmit rate defined in the first mode includes all transmit rates of the gateway device, for sending a signal, and defined in the second mode, that is, when the gateway device uses the first mode to send a signal, a transmit rate used in the second mode to send a signal may be compatibly used.

It should be noted that, after the processing unit 302 switches the first mode to the second mode, the transmit rate defined in the second mode and used by the gateway device to send a signal differs from the transmit rate defined in the first mode and used to send a signal.

It should be noted that, when the current transmission mode acquired by the acquiring unit 301 and used to send a signal is the first mode, the acquiring unit 301 may further control the transmit power according to an acquired current transmit rate used to send a signal, which is not limited by the present invention.

Second method: The processing unit 302 is specifically configured to, when the acquiring unit 301 determines that the transmission mode is a second mode, switch the second mode to a third mode, and adjust the transmit power, where
a maximum transmit rate of the gateway device in the third mode is less than a maximum transmit rate of the gateway device in the second mode.

Specifically, when the acquiring unit 301 determines that the current transmission mode used to send a signal is the second mode, the processing unit 302 switches the second mode to the third mode, so that when sending a signal, the gateway device uses a transmit rate, of the gateway device, defined in the third mode to send a signal. Compared with using a transmit rate, of the gateway device, defined in the second mode to send a signal, in the third mode, the transmit rate is reduced, and the corresponding adjustment uses transmit power corresponding to the transmit rate, of the gateway device, defined in the third mode, that is, current transmit power is reduced to the transmit power corresponding to the transmit rate, of the gateway device, defined in the third mode, thereby lowering a temperature of the gateway device.

Further, the acquiring unit 301 is further configured to acquire a current transmit rate.

Specifically, when it is determined that the current transmission mode used to send a signal is the second mode, the acquiring unit 301 may further acquire the current transmit rate used to send a signal, and compare the acquired current transmit rate used to send a signal with a first preset value, so as to determine whether the acquired current transmit rate used to send a signal is less than the first preset value.

The processing unit 302 is specifically configured to, when the acquiring unit 301 determines that the current transmit rate is less than the first preset value, switch the second mode to the third mode.

The processing unit 302 is specifically configured to, when the acquiring unit 301 determines that the current transmit rate is greater than or equal to the first preset value, limit the current transmit rate to a first preset rate, and adjusts the transmit power, where
the first preset rate is a minimum transmit rate that is in at least one transmit rate of the gateway device in the second mode and is greater than the maximum transmit rate of the gateway device in the third mode.

Specifically, when the acquiring unit 301 determines that the current transmit rate used to send a signal is greater than or equal to the first preset value, the acquiring unit 301 determines that the current transmit rate used to send a signal is too large and transmit power corresponding to the transmit rate is too high, which causes an increase of the temperature of the gateway device. In this case, to avoid an increase of the temperature of the gateway device, the current transmit rate used to send a signal needs to be reduced, that is, the processing unit 302 limits the current transmit rate used to send a signal to the minimum transmit rate that is in the at least one transmit rate of the gateway device in the second mode and is greater than the maximum transmit rate of the gateway device in the third mode, that is, limits the current transmit rate used to send a signal to the first preset rate. In this way, the first preset rate is used to send a signal, and transmit power corresponding to the first preset rate is correspondingly adjusted, that is, the current transmit power is reduced to the transmit power corresponding to the first preset rate, and then the transmit power corresponding to the first preset rate is used to send a signal, which avoids an increase of the temperature of the gateway device.

It should be noted that, at least one transmit rate, of the gateway device, for sending a signal is defined in the second mode, and the at least one transmit rate defined in the second mode includes all transmit rates of the gateway device, for sending a signal, and defined in the third mode, that is, when the gateway device uses the second mode to send a signal, a transmit rate used in the third mode to send a signal may be compatibly used.

It should be noted that, after the processing unit 302 switches the second mode to the third mode, the transmit rate defined in the third mode and used by the gateway device to send a signal differs from the transmit rate defined in the second mode and used to send a signal.

Third method: The processing unit 302 is specifically configured to, when the acquiring unit 301 determines that the transmission mode is the third mode, limit the transmit rate to a second preset rate, and adjust the transmit power, where
the second preset rate is a minimum transmit rate used to send a signal.

Specifically, when the acquiring unit 301 determines that the current transmission mode used to send a signal is the third mode, the processing unit 302 limits the transmit rate to the minimum transmit rate used to send a signal, that is, limits the transmit rate to the second preset rate, where the second preset rate can ensure normal sending of a signal, and transmit power corresponding to the second preset rate is correspondingly adjusted, that is, current transmit power is reduced to the transmit power corresponding to the second preset rate, and then the transmit power corresponding to the second preset rate is used to send a signal, thereby lowering a temperature of the gateway device.

Further, as shown in FIG. 4, the gateway device further includes: a sending unit 303.

The sending unit 303 is configured to send a signal according to the adjusted transmit power.

Specifically, after the processing unit 302 adjusts the transmit power of the gateway device according to the current transmission mode used to send a signal, the sending unit 303 sends a signal by using the adjusted transmit power, which effectively lowers the temperature of the gateway device.

According to the gateway device provided in this embodiment of the present invention, after acquiring a temperature value of an electronic component, the gateway device compares the acquired temperature value of the electronic component with a preset temperature value; when it is determined that the acquired temperature value of the electronic component is greater than or equal to the preset temperature value, acquires a current transmission mode, where the current transmission mode is used by the gateway device to send a signal; and adjusts transmit power of the gateway device according to the current transmission mode used to send a signal. Therefore, the gateway device may reduce a transmit rate of the gateway device by switching the transmission mode, or may reduce the transmit rate of the gateway device by directly limiting a current transmit rate used to send a signal, which further reduces the transmit power of the gateway device, thereby ensuring EVM and sensitivity that are of the gateway device and ensuring data transmission reliability of the gateway device while lowering a temperature of the gateway device.

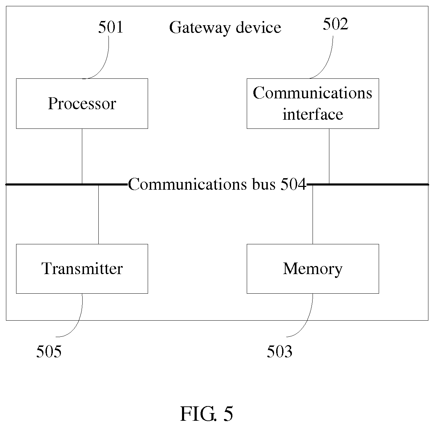

An embodiment of the present invention provides a gateway device, which, as shown in FIG. 5, includes: a processor (processor) 501, a communications interface (Communications Interface) 502, a memory (memory) 503, a bus 504, and a transmitter 505, where the processor 501, the communications interface 502, the transmitter 505, and the memory 503 complete intercommunication by using the bus 504.

The processor 501 may be a central processing unit CPU, or an application specific integrated circuit ASIC (Application Specific Integrated Circuit), or one or more integrated circuits configured to implement this embodiment of the present invention.

The memory 503 is configured to store program code, where the program code includes a computer operation instruction. The memory 503 may include a high-speed RAM memory, and may further include a non-volatile memory (non-volatile memory), such as, at least one magnetic disk memory. The processor 501 is configured to invoke the program code stored in the memory 503, which is specifically as follows:
the communications interface 502, configured to acquire a temperature value of an electronic component, where

The electronic component includes a memory chip or a crystal oscillator.

Specifically, the communications interface 502 acquires a temperature of the memory chip or the crystal oscillator by using a detection module that detects the temperature of the memory chip or the crystal oscillator, and compares the acquired temperature value of the memory chip or the crystal oscillator with a preset temperature value, so as to determine whether the acquired temperature value of the memory chip or the crystal oscillator is greater than or equal to the preset temperature value.

The communications interface 502 is further configured to acquire a current transmission mode when it is determined that the temperature value is greater than or equal to the preset temperature value.

The transmission mode is a mode used by the gateway device to send a signal.

Specifically, when it is determined that the acquired temperature value of the memory chip or the crystal oscillator is greater than or equal to the preset temperature value, the communications interface 502 reads the stored current transmission mode used to send a signal.

The processor 501 is configured to adjust transmit power according to the transmission mode acquired by the communications interface 502.

Adjusted transmit power is less than the transmit power before the adjustment.

Specifically, methods for adjusting, by the processor 501, the transmit power of the gateway device vary with different current transmission modes acquired by the communications interface 502 and used to send a signal, which are specifically as follows:

First method: The processor 501 is specifically configured to, when the communications interface 502 determines that the transmission mode is a first mode, switch the first mode to a second mode, and adjust the transmit power, where
a maximum transmit rate of the gateway device in the first mode is greater than a maximum transmit rate of the gateway device in the second mode.

Specifically, when the communications interface 502 determines that the current transmission mode used to send a signal is the first mode, the processor 501 switches the first mode to the second mode, so that when sending a signal, the gateway device uses a transmit rate, of the gateway device, defined in the second mode to send a signal. Compared with using a transmit rate, of the gateway device, defined in the first mode to send a signal, in the second mode, the transmit rate is reduced, and the corresponding adjustment uses transmit power corresponding to the transmit rate, of the gateway device, defined in the second mode, that is, current transmit power is reduced to the transmit power corresponding to the transmit rate, of the gateway device, defined in the second mode, thereby lowering a temperature of the gateway device.

It should be noted that, at least one transmit rate, of the gateway device, for sending a signal is defined in the first mode, and the at least one transmit rate defined in the first mode includes all transmit rates of the gateway device, for sending a signal, and defined in the second mode, that is, when the gateway device uses the first mode to send a signal, a transmit rate used in the second mode to send a signal may be compatibly used.

It should be noted that, after the processor 501 switches the first mode to the second mode, the transmit rate defined in the second mode and used by the gateway device to send a signal differs from the transmit rate defined in the first mode and used to send a signal.

It should be noted that, when the current transmission mode acquired by the communications interface 502 and used to send a signal is the first mode, the communications interface 502 may further control the transmit power according to an acquired current transmit rate used to send a signal, which is not limited in the present invention.

Second method: The processor 501 is specifically configured to, when the communications interface 502 determines that the transmission mode is a second mode, switch the second mode to a third mode, and adjust the transmit power, where
a maximum transmit rate of the gateway device in the third mode is less than a maximum transmit rate of the gateway device in the second mode.

Specifically, when the communications interface 502 determines that the current transmission mode used to send a signal is the second mode, the processor 501 switches the second mode to the third mode, so that when sending a signal, the gateway device uses a transmit rate, of the gateway device, defined in the third mode to send a signal. Compared with using a transmit rate, of the gateway device, defined in the second mode to send a signal, in the third mode, the transmit rate is reduced, and the corresponding adjustment uses transmit power corresponding to the transmit rate, of the gateway device, defined in the third mode, that is, current transmit power is reduced to the transmit power corresponding to the transmit rate, of the gateway device, defined in the third mode, thereby lowering a temperature of the gateway device.

Further, the communications interface 502 is further configured to acquire a current transmit rate.

Specifically, when it is determined that the current transmission mode used to send a signal is the second mode, the communications interface 502 may further acquire the current transmit rate used to send a signal, and compare the acquired current transmit rate used to send a signal with a first preset value, so as to determine whether the acquired current transmit rate used to send a signal is less than the first preset value.

The processor 501 is specifically configured to, when the communications interface 502 determines that the current transmit rate is less than the first preset value, switch the second mode to the third mode.

The processor 501 is specifically configured to, when the communications interface 502 determines that the current transmit rate is greater than or equal to the first preset value, limit the current transmit rate to a first preset rate, and adjusts the transmit power, where
the first preset rate is a minimum transmit rate that is in at least one transmit rate of the gateway device in the second mode and is greater than the maximum transmit rate of the gateway device in the third mode.

Specifically, when the communications interface 502 determines that the current transmit rate used to send a signal is greater than or equal to the first preset value, the communications interface 502 determines that the current transmit rate used to send a signal is too large and transmit power corresponding to the transmit rate is too high, which causes an increase of the temperature of the gateway device. In this case, to avoid an increase of the temperature of the gateway device, the current transmit rate used to send a signal needs to be reduced, that is, the processor 501 limits the current transmit rate used to send a signal to the minimum transmit rate that is in the at least one transmit rate of the gateway device in the second mode and is greater than the maximum transmit rate of the gateway device in the third mode, that is, limits the current transmit rate used to send a signal to the first preset rate. In this way, the first preset rate is used to send a signal, and transmit power corresponding to the first preset rate is correspondingly adjusted, that is, the current transmit power is reduced to the transmit power corresponding to the first preset rate, and then the transmit power corresponding to the first preset rate is used to send a signal, which avoids an increase of the temperature of the gateway device.

It should be noted that, at least one transmit rate, of the gateway device, for sending a signal is defined in the second mode, and the at least one transmit rate defined in the second mode includes all transmit rates of the gateway device, for sending a signal, and defined in the third mode, that is, when the gateway device uses the second mode to send a signal, a transmit rate used in the third mode to send a signal may be compatibly used.

It should be noted that, after the processor 501 switches the second mode to the third mode, the transmit rate defined in the third mode and used by the gateway device to send a signal differs from the transmit rate defined in the second mode and used to send a signal.

Third method: The processor 501 is specifically configured to, when the communications interface 502 determines that the transmission mode is the third mode, limit the transmit rate to a second preset rate, and adjust the transmit power, where
the second preset rate is a minimum transmit rate used to send a signal.

Specifically, when the communications interface 502 determines that the current transmission mode used to send a signal is the third mode, the processor 501 limits the transmit rate to the minimum transmit rate used to send a signal, that is, limits the transmit rate to the second preset rate, where the second preset rate can ensure normal sending of a signal, and transmit power corresponding to the second preset rate is correspondingly adjusted, that is, the current transmit power is reduced to the transmit power corresponding to the second preset rate, and then the transmit power corresponding to the second preset rate is used to send a signal, thereby lowering a temperature of the gateway device.

The transmitter 505 is configured to send a signal according to the adjusted transmit power.

Specifically, after the processor 501 adjusts the transmit power of the gateway device according to the current transmission mode used to send a signal, the transmitter 505 sends a signal by using the adjusted transmit power, which effectively lowers the temperature of the gateway device.

According to the gateway device provided in this embodiment of the present invention, after acquiring a temperature value of an electronic component, the gateway device compares the acquired temperature value of the electronic component with a preset temperature value; when it is determined that the acquired temperature value of the electronic component is greater than or equal to the preset temperature value, acquires a current transmission mode, where the current transmission mode is used by the gateway device to send a signal; and adjusts transmit power of the gateway device according to the current transmission mode used to send a signal. Therefore, the gateway device may reduce a transmit rate of the gateway device by switching the transmission mode, or may reduce the transmit rate of the gateway device by directly limiting a current transmit rate used to send a signal, which further reduces the transmit power of the gateway device, thereby ensuring EVM and sensitivity that are of the gateway device and ensuring data transmission reliability of the gateway device while lowering a temperature of the gateway device.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The storage medium includes various media capable of storing program codes, such as a USB flash drive, a mobile hard disk, a read only memory (Read-Only Memory, ROM for short), a random access memory (Random Access Memory, RAM for short), a non-volatile random access memory (Non-Volatile Random Access Memory), a flash memory (flash memory), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for controlling transmit power, comprising:
acquiring (101), by a gateway device, a temperature value of an electronic component;
acquiring (102), by the gateway device, a current transmission mode when the gateway device determines that the temperature value is greater than or equal to a preset temperature value, wherein the transmission mode is a mode used by the gateway device to send a signal and the transmission mode is a wireless transmission protocol according to IEEE 802.11; and
adjusting (103), by the gateway device, transmit power according to the transmission mode, wherein adjusted transmit power is less than the transmit power before the adjustment;
wherein the adjusting (103), by the gateway device, transmit power according to the transmission mode comprises:
when the gateway device determines that the transmission mode is a second mode, switching, by the gateway device, the second mode to a third mode, and adjusting the transmit power, wherein a maximum transmit rate of the gateway device in the third mode is less than a maximum transmit rate of the gateway device in the second mode;
before the switching, by the gateway device, the second mode to a third mode, further comprising:
acquiring, by the gateway device, a current transmit rate; wherein
the switching, by the gateway device, the second mode to a third mode comprises:
switching, by the gateway device, the second mode to the third mode when the gateway device determines that the current transmit rate is less than a first preset value; and when the gateway device determines that the current transmit rate is greater than or equal to the first preset value, the gateway device limits the current transmit rate to a first preset rate, and adjusts the transmit power, wherein the first preset rate is a minimum transmit rate that is in at least one transmit rate of the gateway device in the second mode and is greater than the maximum transmit rate of the gateway device in the third mode.

2. The method according to claim 1, wherein the electronic component comprises a memory chip or a crystal oscillator.

3. The method according to claim 1 or 2, after the adjusting (103), by the gateway device, transmit power according to the transmission mode, further comprising:
sending (104), by the gateway device, a signal according to the adjusted transmit power.

4. A gateway device, comprising:
an acquiring unit (301), configured to acquire a temperature value of an electronic component, wherein
the acquiring unit (301) is further configured to acquire a current transmission mode when it is determined that the temperature value is greater than or equal to a preset temperature value, wherein the transmission mode is a mode used by the gateway device to send a signal and the transmission mode is a wireless transmission protocol according to IEEE 802.11; and
a processing unit (302), configured to adjust transmit power according to the transmission mode acquired by the acquiring unit, wherein adjusted transmit power is less than the transmit power before the adjustment; wherein:
the processing unit (302) is specifically configured to, when the acquiring unit determines that the transmission mode is a second mode, switch the second mode to a third mode, and adjust the transmit power, wherein a maximum transmit rate of the gateway device in the third mode is less than a maximum transmit rate of the gateway device in the second mode, and wherein:
the acquiring unit (301) is further configured to acquire a current transmit rate; and
the processing unit (302) is specifically configured to, when the acquiring unit determines that the current transmit rate is less than a first preset value, switch the second mode to the third mode, and when the acquiring unit determines that the current transmit rate is greater than or equal to the first preset value, limit the current transmit rate to a first preset rate, and adjust the transmit power, wherein the first preset rate is a minimum transmit rate that is in at least one transmit rate of the gateway device in the second mode and is greater than the maximum transmit rate of the gateway device in the third mode.

5. The gateway device according to claim 4, wherein the electronic component comprises a memory chip or a crystal oscillator.

6. The gateway device according to claim 4 or 5, further comprising:
a sending unit (303), configured to send a signal according to the adjusted transmit power.

## Patentansprüche

1. Verfahren zum Steuern von Sendeleistung, das Folgendes umfasst:
Erfassen (101) durch eine Gateway-Vorrichtung eines Temperaturwertes einer elektronischen Komponente;
Erfassen (102) durch die Gateway-Vorrichtung einer aktuellen Sendebetriebsart, wenn die Gateway-Vorrichtung bestimmt, dass der Temperaturwert größer oder gleich einem im Voraus festgelegten Temperaturwert ist, wobei die Sendebetriebsart eine Betriebsart ist, die von der Gateway-Vorrichtung verwendet wird, um ein Signal zu senden, und die Sendebetriebsart ein Protokoll für drahtloses Senden gemäß IEEE 802.11 ist; und
Einstellen (103) durch die Gateway-Vorrichtung der Sendeleistung in Übereinstimmung mit der Sendebetriebsart, wobei die eingestellte Sendeleistung kleiner als die Sendeleistung vor dem Einstellen ist;
wobei das Einstellen (103) durch die Gateway-Vorrichtung der Sendeleistung in Übereinstimmung mit der Sendebetriebsart Folgendes umfasst:
wenn die Gateway-Vorrichtung bestimmt, dass die Sendebetriebsart eine zweite Betriebsart ist, Schalten durch die Gateway-Vorrichtung von der zweiten Betriebsart zu einer dritten Betriebsart und Einstellen der Sendeleistung, wobei eine maximale Senderate der Gateway-Vorrichtung in der dritten Betriebsart kleiner als eine maximale Senderate der Gateway-Vorrichtung in der zweiten Betriebsart ist;
vor dem Schalten durch die Gateway-Vorrichtung von der zweiten Betriebsart zu der dritten Betriebsart ferner umfassend:
Erfassen durch die Gateway-Vorrichtung einer aktuellen Senderate; wobei das Schalten durch die Gateway-Vorrichtung von der zweiten Betriebsart zu einer dritten Betriebsart Folgendes umfasst:
Schalten durch die Gateway-Vorrichtung von der zweiten Betriebsart zu der dritten Betriebsart, wenn die Gateway-Vorrichtung bestimmt, dass die aktuelle Senderate kleiner als ein erster im Voraus festgelegter Wert ist; und dann, wenn die Gateway-Vorrichtung bestimmt, dass die aktuelle Senderate größer oder gleich dem ersten im Voraus festgelegten Wert ist, Begrenzen durch die Gateway-Vorrichtung der aktuellen Senderate auf eine erste im Voraus festgelegte Rate und Einstellen der Sendeleistung, wobei die erste im Voraus festgelegte Rate eine minimale Senderate ist, die wenigstens eine Senderate der Gateway-Vorrichtung in der zweiten Betriebsart ist und größer als die maximale Senderate der Gateway-Vorrichtung in der dritten Betriebsart ist.

2. Verfahren nach Anspruch 1, wobei die elektronische Komponente einen Speicherchip oder einen Kristalloszillator umfasst.

3. Verfahren nach Anspruch 1 oder 2, das nach dem Einstellen (103) durch die Gateway-Vorrichtung der Sendeleistung in Übereinstimmung mit der Sendebetriebsart ferner Folgendes umfasst:
Senden (104) durch die Gateway-Vorrichtung eines Signals in Übereinstimmung mit der eingestellten Sendeleistung.

4. Gateway-Vorrichtung, die Folgendes umfasst:
eine Erfassungseinheit (301), die konfiguriert ist, einen Temperaturwert einer elektronischen Komponente zu erfassen, wobei
die Erfassungseinheit (301) ferner konfiguriert ist, eine aktuelle Sendebetriebsart zu erfassen, wenn bestimmt wird, dass der Temperaturwert größer oder gleich einem im Voraus festgelegten Temperaturwert ist, wobei die Sendebetriebsart eine Betriebsart ist, die von der Gateway-Vorrichtung verwendet wird, um ein Signal zu senden, und die Sendebetriebsart ein Protokoll für drahtloses Senden gemäß IEEE 802.11 ist; und
eine Verarbeitungseinheit (302), die konfiguriert ist, die Sendeleistung in Übereinstimmung mit der Sendebetriebsart, die von der Erfassungseinheit erfasst wird, einzustellen, wobei die eingestellte Sendeleistung kleiner als die Sendeleistung vor dem Einstellen ist; wobei:
die Verarbeitungseinheit (302) insbesondere konfiguriert ist, dann, wenn die Erfassungseinheit bestimmt, dass die Sendebetriebsart eine zweite Betriebsart ist, von der zweiten Betriebsart zu einer dritten Betriebsart zu schalten und die Sendeleistung einzustellen, wobei eine maximale Senderate der Gateway-Vorrichtung in der dritten Betriebsart kleiner als eine maximale Senderate der Gateway-Vorrichtung in der zweiten Betriebsart ist, und wobei:
die Erfassungseinheit (301) ferner konfiguriert ist, eine aktuelle Senderate zu erfassen; und
die Verarbeitungseinheit (302) insbesondere konfiguriert ist, dann, wenn die Erfassungseinheit bestimmt, dass die aktuelle Senderate kleiner als ein erster im Voraus festgelegter Wert ist, von der zweiten Betriebsart zu der dritten Betriebsart zu schalten, und dann, wenn die Erfassungseinheit bestimmt, dass die aktuelle Senderate größer oder gleich dem ersten im Voraus eingestellten Wert ist, die aktuelle Senderate auf die erste im Voraus festgelegte Rate zu begrenzen und die Sendeleistung einzustellen, wobei die erste im Voraus festgelegte Rate eine minimale Senderate ist, die wenigstens eine Senderate der Gateway-Vorrichtung in der zweiten Betriebsart ist und größer als die maximale Senderate der Gateway-Vorrichtung in der dritten Betriebsart ist.

5. Gateway-Vorrichtung nach Anspruch 4, wobei die elektronische Komponente einen Speicherchip oder einen Kristalloszillator umfasst.

6. Gateway-Vorrichtung nach Anspruch 4 oder 5, die ferner Folgendes umfasst:
eine Sendeeinheit (303), die konfiguriert ist, ein Signal in Übereinstimmung mit der eingestellten Sendeleistung zu senden.

## Revendications

1. Procédé de régulation de puissance de transmission, comprenant :
l'acquisition (101), par un dispositif de passerelle, d'une valeur de température d'un composant électronique ;
l'acquisition (102), par le dispositif de passerelle, d'un mode de transmission actuel lorsque le dispositif de passerelle détermine que la valeur de température est supérieure ou égale à une valeur de température préétablie, dans lequel le mode de transmission est un mode utilisé par le dispositif de passerelle pour envoyer un signal et le mode de transmission est un protocole de transmission sans fil selon la norme IEEE 802.11 ; et
le réglage (103), par le dispositif de passerelle, d'une puissance de transmission selon le mode de transmission, dans lequel une puissance de transmission réglée est inférieure à la puissance de transmission avant le réglage ;
dans lequel le réglage (103), par le dispositif de passerelle, d'une puissance de transmission selon le mode de transmission comprend :
lorsque le dispositif de passerelle détermine que le mode de transmission est un deuxième mode, le passage, par le dispositif de passerelle, du deuxième mode à un troisième mode, et le réglage de la puissance de transmission, dans lequel un débit de transmission maximal du dispositif de passerelle dans le troisième mode est inférieur à un débit de transmission maximal du dispositif de passerelle dans le deuxième mode ;
avant le passage, par le dispositif de passerelle, du deuxième mode à un troisième mode, comprenant en outre :
l'acquisition, par le dispositif de passerelle, d'un débit de transmission actuel ; dans lequel
le passage, par le dispositif de passerelle, du deuxième mode à un troisième mode comprend :
le passage, par le dispositif de passerelle, du deuxième mode au troisième mode lorsque le dispositif de passerelle détermine que le débit de transmission actuel est inférieur à une première valeur préétablie ; et lorsque le dispositif de passerelle détermine que le débit de transmission actuel est supérieur ou égal à la première valeur préétablie, le dispositif de passerelle limite le débit de transmission actuel à un premier débit préétabli, et règle la puissance de transmission, dans lequel le premier débit préétabli est un débit de transmission minimal qui est dans au moins un débit de transmission du dispositif de passerelle dans le deuxième mode et est supérieur au débit de transmission maximal du dispositif de passerelle dans le troisième mode.

2. Procédé selon la revendication 1, dans lequel le composant électronique comprend une puce mémoire ou un oscillateur à cristal.

3. Procédé selon la revendication 1 ou 2, après le réglage (103), par le dispositif de passerelle, d'une puissance de transmission selon le mode de transmission, comprenant en outre :
l'envoi (104), par le dispositif de passerelle, d'un signal selon la puissance de transmission réglée.

4. Dispositif de passerelle, comprenant :
une unité d'acquisition (301), configurée pour acquérir une valeur de température d'un composant électronique, dans lequel
l'unité d'acquisition (301) est en outre configurée pour acquérir un mode de transmission actuel lorsqu'on détermine que la valeur de température est supérieure ou égale à une valeur de température préétablie, dans lequel le mode de transmission est un mode utilisé par le dispositif de passerelle pour envoyer un signal et le mode de transmission est un protocole de transmission sans fil selon la norme IEEE 802.11 ; et
une unité de traitement (302), configurée pour régler une puissance de transmission selon le mode de transmission acquis par l'unité d'acquisition, dans lequel une puissance de transmission réglée est inférieure à la puissance de transmission avant le réglage ; dans lequel :
l'unité de traitement (302) est spécifiquement configurée, lorsque l'unité d'acquisition détermine que le mode de transmission est un deuxième mode, pour passer du deuxième mode à un troisième mode, et pour régler la puissance de transmission, dans lequel un débit de transmission maximal du dispositif de passerelle dans le troisième mode est inférieur à un débit de transmission maximal du dispositif de passerelle dans le deuxième mode, et dans lequel :
l'unité d'acquisition (301) est en outre configurée pour acquérir un débit de transmission actuel ; et
l'unité de traitement (302) est spécifiquement configurée, lorsque l'unité d'acquisition détermine que le débit de transmission actuel est inférieur à une première valeur préétablie, pour passer du deuxième mode au troisième mode, et lorsque l'unité d'acquisition détermine que le débit de transmission actuel est supérieur ou égal à la première valeur préétablie, pour limiter le débit de transmission actuel à un premier débit préétabli, et pour régler la puissance de transmission, dans lequel le premier débit préétabli est un débit de transmission minimal qui est dans au moins un débit de transmission du dispositif de passerelle dans le deuxième mode et est supérieur au débit de transmission maximal du dispositif de passerelle dans le troisième mode.

5. Dispositif de passerelle selon la revendication 4, dans lequel le composant électronique comprend une puce mémoire ou un oscillateur à cristal.

6. Dispositif de passerelle selon la revendication 4 ou 5, comprenant en outre :
une unité d'envoi (303), configurée pour envoyer un signal selon la puissance de transmission réglée.
